# EUROPEAN PATENT SPECIFICATION

(11) **EP 4 385 770 B1**
(45) Date of publication and mention of the grant of the patent: **08.07.2026**
(21) Application number: 22214264.8
(22) Date of filing: 16.12.2022
(51) Int. Cl.: B60G 11/27, B60G 17/052, B60T 17/00, G10K 11/16, F16L 55/027

(54) **PRESSURE CONTROL ARRANGEMENT FOR A PNEUMATIC VALVE OF AN AIR SUSPENSION SYSTEM FOR A VEHICLE, IN PARTICULAR UTILITY VEHICLE, SILENCING ARRANGEMENT, PNEUMATIC VALVE, AIR SUSPENSION SYSTEM AND VEHICLE, IN PARTICULAR UTILITY VEHICLE**
DRUCKREGLERANORDNUNG FÜR EIN LUFTFEDERSYSTEM FÜR EIN FAHRZEUG, GERÄUSCHDÄMPFUNGSANORDNUNG, LUFTFEDERSYSTEM UND FAHRZEUG
DISPOSITIF DE COMMANDE DE PRESSION POUR UNE SOUPAPE PNEUMATIQUE D'UN SYSTÈME DE SUSPENSION PNEUMATIQUE POUR UN VÉHICULE, EN PARTICULIER VÉHICULE UTILITAIRE, DISPOSITIF SILENCIEUX, SOUPAPE PNEUMATIQUE, SYSTEME DE SUSPENSION PNEUMATIQUE, ET VEHICULE, EN PARTICULIER VÉHICULE UTILITAIRE

(43) Date of publication of application: 19.06.2024
(73) Proprietor: ZF CV Systems Europe BV, 1170 Brüssel (BE)
(72) Inventor: ZAK, Przemyslaw, 50-436 Wroclaw (PL); ZELENT, Karol, 51-311 Kielczowek (PL)
(74) Representative: Ohlendorf, Henrike

(56) References cited:
- EP-A1- 0 596 220
- EP-A2- 0 359 948
- DE-A1- 102008 029 489
- DE-A1- 102013 016 084
- DE-A1- 102016 100 139
- DE-C1- 19 701 361

## Description

The present invention relates to a pressure control arrangement for a pneumatic valve of an air suspension system for a vehicle, in particular a utility vehicle. The invention further relates to a silencing arrangement for a pneumatic valve of an air suspension system for a vehicle, in particular a utility vehicle, to a pneumatic valve of an air suspension system for a vehicle, in particular a utility vehicle, to an air suspension system for a vehicle, in particular a utility vehicle, and to a vehicle, in particular a utility vehicle.

Such a pressure control arrangement comprises a body part adapted to provide an exhaust port of a fluid channel of a pneumatic valve extended along an axial direction and an annular straining device mountable to the body part, wherein the straining device comprises a fluid port for fluid communication between the exhaust port and a silencing device mountable to the body part. Therein, a pressurised fluid may flow from the fluid channel through the fluid port. The fluid port may reduce the speed of the pressurised fluid and may thereby reduce noise which may be generated by the flow of the fluid. In the mounted state, the silencing device is arranged and adapted to fixate the straining device.

According to the prior art, an area between the body part and the straining device is sealed to avoid noise emission. The silencing device comprises a housing with an outlet opening to release the fluid after the fluid has passed a mesh of the silencing device. However, the outlet opening and/or the fluid port might be blocked, e.g., by ice and/or another contamination. In this case, the pressurised fluid cannot be released in a controlled manner. As a result, the housing of the silencing device might crack. The crack may deteriorate the function of the silencing device and may become a safety problem.

EP 3798071 A1 discloses a pneumatic valve. The pneumatic valve comprises an inlet port for receiving pressurised fluid for facilitating control of the valve and an exhaust or a relief port for relieving the pressurised fluid when necessary and a silencer for reducing the noise generated during the operation of pneumatic valve.

WO 2015/079292 A1 discloses a lift axle control module for a motor vehicle. The module comprises a silencer for an exhaust at a bottom part.

EP 3174770 A1 discloses a device for reducing the noise of two merged concentric gas streams which join in a common outlet, the first gas stream is guided through a pipe which is surrounded by a coaxial, annular channel for guiding the second gas stream. One end of the pipe which is aligned towards the common outlet comprises crenellated recesses which are distributed on the periphery. In order to reduce the noise level of the two gas streams, which is due to the turbulence, the recesses are distributed on the periphery in an irregular manner and/or comprise an uneven axial extension and/or an irregular peripheral-related extension.

DE 10 2008 029489 A1, which shows the preamble of claim 1, discloses a silencer for a compressed air system. The silencer has a housing and a damping means, with webs projecting into the damping means. Incoming air is directed from an air inlet to an air outlet.

DE 10 2013 016084 A1 and EP 0 359 948 A2 disclose a silencer with a housing, wherein a first pipe and a second pipe are separated from each other by a baffle plate. A third tube is arranged in the second tube, whereby an air flow can be achieved through openings in the first tube through channels to the third tube.

EP 0 596 220 A1 discloses a venting device with a housing, the housing having an air inlet and an air outlet. Insulating material for noise suppression is arranged in the housing, with channels being arranged in the insulating material to reduce dynamic pressure.

DE 197 01 361 C1 discloses a noise damper for compressed air systems with a housing, whereby a damping material is located inside the housing in order to achieve noise damping. A secondary duct is arranged in the silencer, whereby the secondary duct can ensure continued operation in the event of contamination.

DE 10 2016 100139 A1 discloses a noise damper with a housing and an air inlet and an air outlet, whereby damping means for noise suppression are arranged in the noise damper.

It is an object of the present invention to provide a technological contribution and to improve at least one aspect of the prior art. In particular, an object of the invention may be to provide a silencing mechanism that functions reliably under several environmental conditions.

The object is solved by the subject-matter according to independent claim 1. Dependent claims relate to optional embodiments.

According to an aspect of the invention, a pressure control arrangement for a pneumatic valve of an air suspension system for a vehicle, in particular a utility vehicle, is provided. Therein, the pressure control arrangement comprises a body part adapted to provide an exhaust port of a fluid channel extended along an axial direction, and an annular straining device mountable to the body part, wherein the straining device comprises a fluid port for fluid communication between the exhaust port and a silencing device mountable to the body part. The straining device is adapted to reversibly move along the axial direction between a basic position and an actuated position in dependence on a pressure of a fluid within the exhaust port so that the fluid is releasable from the exhaust port in the actuated position.

The pressure control arrangement comprises the body part. The body part and the fluid channel may be comprised by the pneumatic valve. The fluid channel extends in the axial direction and may terminate at the exhaust port at which the fluid may flow through the fluid port to the silencing device. The straining device may provide a passageway for the pressurised fluid. By the fluid port, fluid flowing through the straining device may be slowed down which may reduce noise.

To provide a reliable mechanism to release pressurised air in the event that an opening in a housing of the silencing device and/or the fluid port may be blocked, the straining device is movably arranged at the body part so that, in the actuated position, the fluid is released from the exhaust port. Therein, the straining device is, in the mounted state, adapted to reversibly move between the basic position and the actuated position in dependence on the pressure of the fluid. The basic position may relate to a normal working condition of the straining device. The straining device may be moved in the basic position, if the pressure is comparably low, i.e., the opening in the housing and/or the fluid port is not blocked and the fluid may be released from the pressure control arrangement via the opening into an environment. The straining device may be moved if the pressure is comparably large, i.e., the opening in the housing and/or the fluid port is blocked and the fluid may not be released from the pressure control arrangement via the opening into an environment. By moving the straining device, the pressurised fluid is released by a fluid passageway other than by the opening into the environment. This enables a reliable mechanism to release pressurised air controllably. The actuated position may relate to a working condition in which an opening in the housing and/or the fluid port is blocked, e.g., by ice. A risk of damaging a part of the pressure control arrangement and/or the housing is reduced. Pressurised air may be released under several environmental conditions, in particular at a temperature of less than 0 °C, at which the opening may be blocked by ice.

Optionally, the body part and the straining device are sealingly connected to each other in the basic position. In this embodiment, the pressure control arrangement provides a sealing connection between the body part and the straining device. This may reduce a whistling noise which may occur if a pressurised fluid flows between the straining device and the body part.

According to the invention, the body part comprises an inner surface and a circumferentially arranged chamfer at the inner surface. The chamfer may improve the release of pressurised air in the event that the straining device is moved into the actuated position. The chamfer may increase a cross-section of a fluid passageway between the body part and the straining device so that the pressurised fluid may be released efficiently and in a controlled manner.

Optionally, the body part comprises a cylindrically-shaped inner surface section, and the chamfer is arranged between the cylindrically-shaped inner surface section and a radially extended base of the annular straining device. The cylindrically-shaped inner surface section may provide the fluid channel and may enable mounting the straining device to fixate a radial position and/or an orientation of the straining device. Thus, the straining device may move along the axial direction and along the cylindrically-shaped inner surface section until it reaches the chamfer. At the chamfer, the diameter of the fluid channel increases compared to the diameter of the cylindrically-shaped inner surface section. In the basic position, the radially extended base may achieve sealing. Moving the straining device in the actuated position may enable the fluid to flow through a fluid passageway as provided by the chamfer.

Optionally, the body part comprises a radially extended surface section, and the chamfer is arranged, in the axial direction, between the radially extended surface section and the exhaust port. The radially extended surface section may achieve sealing, in the basic position, of the straining device.

Optionally, the chamfer is arranged between the cylindrically-shaped inner surface section and the radially extended surface section. The chamfer may be efficient to manufacture.

According to the invention, the straining device comprises a radially extended base and an annular lip projecting, in the axial direction, from the radially extended base towards the body part and contacting an inner surface of the body part circumferentially. The annular lip may improve sealing the straining device against the body part to reduce whistling noise.

According to the invention, the annular lip projects beyond the chamfer. In the basic position, the annular lip seals the straining device against the body part while it opens a fluid passageway provided by the chamfer in the actuated position.

According to another aspect of the invention, a silencing arrangement for a pneumatic valve of an air suspension system for a vehicle, in particular a utility vehicle, is provided. The silencing arrangement comprises the pressure control arrangement as described above and a silencing device mounted to the body part. Therein, the pressure control arrangement may comprise an optional technical feature as described above to achieve a technical effect which may correspond thereto.

Optionally, the silencing device comprises a mesh, wherein the mesh is adapted to deform elastically to reversibly move the straining device along the axial direction between a basic position and an actuated position. In other words, the pressurised fluid may move or deflect the straining device against a restoring force, which results from the elasticity and the deformation of the mesh, from the basic position into the actuated position. The pressurised fluid may then be released. The restoring force may then move the straining device from the actuated position into the basic position, i.e., the straining device may work similar to a piston.

According to another aspect of the invention, a pneumatic valve of an air suspension system for a vehicle, in particular a utility vehicle, is provided. The pneumatic valve comprises the pressure control arrangement as described above and/or the silencing arrangement as described above. Therein, the pressure control arrangement and/or the silencing arrangement may comprise an optional technical feature as described above to achieve a technical effect which may correspond thereto.

According to another aspect of the invention, an air suspension system for a vehicle, in particular utility vehicle, is provided. The air suspension system comprises the pressure control arrangement as described above, the silencing arrangement as described above and/or the pneumatic valve as described above. Therein, the pneumatic valve, the pressure control arrangement and/or the silencing arrangement may comprise an optional technical feature as described above to achieve a technical effect which may correspond thereto.

The air suspension system may comprise an electronically controlled air suspension smart pneumatic actuator that is used in advanced systems of suspension control.

According to another aspect of the invention, a vehicle, in particular a utility vehicle, is provided. The vehicle, in particular utility vehicle, comprises the pressure control arrangement as described above, the silencing arrangement as described above, the pneumatic valve as described above, and/or the air suspension system as described above. Therein, the air suspension system, the pneumatic valve, the pressure control arrangement and/or the silencing arrangement may comprise an optional technical feature as described above to achieve a technical effect which may correspond thereto. The vehicle, in particular utility vehicle, may comprise a brake system that comprises the pneumatic valve, the pressure control arrangement and/or the silencing arrangement.

Further advantages and technical features and their technical effects are disclosed in the figures and the description thereof.

The figures show optional embodiments as follows:
- Fig. 1: shows a schematic view of a vehicle, in particular a utility vehicle, according to an embodiment of the invention;
- Fig. 2: shows a detail of a section of a silencing arrangement; and
- Fig. 3: shows a detail of a section of a silencing arrangement according to an embodiment of the invention.

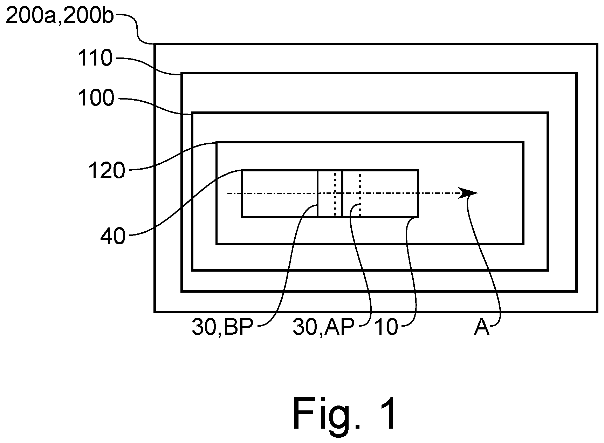

Fig. 1 shows a schematic view of a vehicle 200a, in particular a utility vehicle 200b, according to an embodiment of the invention. In the following, the vehicle 200a, in particular utility vehicle 200b, is referred to as the vehicle 200a, 200b. The vehicle 200a, 200b is a land vehicle, e.g., a truck, a trailer and/or a bus.

The vehicle 200a, 200b comprises an air suspension system 110. The air suspension system 110 is a vehicle suspension powered by an electric and/or engine-driven air pump and/or compressor (not shown).

The air suspension system 110 comprises a pneumatic valve 100 and the pneumatic valve 100 comprises a silencing arrangement 120. The silencing arrangement 120 is adapted to reduce noise and/or sound that results from a pressurised fluid 50 flowing through the pneumatic valve 100 and being released into an environment of the pneumatic valve 100. The fluid 50 is compressed air and/or a compressed gaseous fluid.

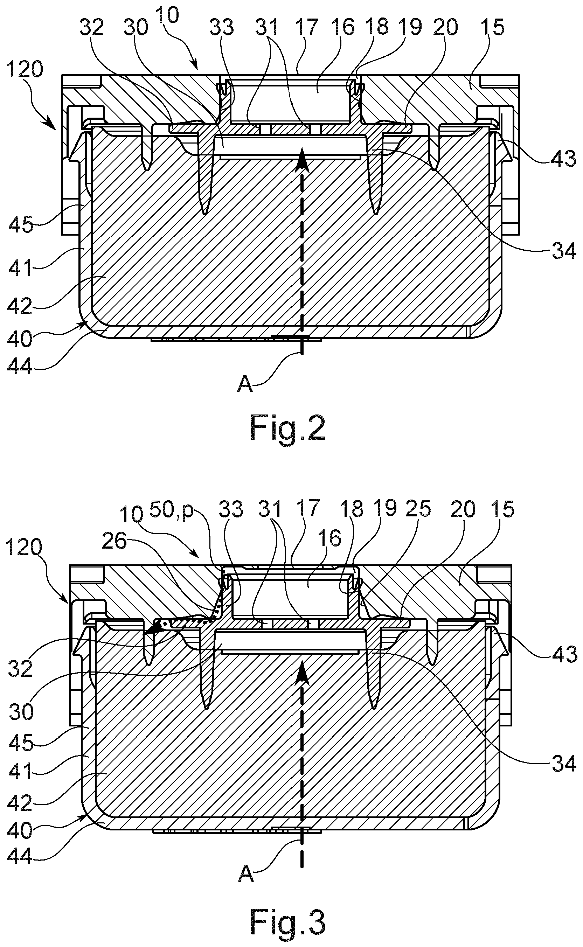

The silencing arrangement 120 comprises a pressure control arrangement 10 and a silencing device 40. A detail of such a silencing arrangement 120 is described with reference to Figs. 2 and 3.

Fig. 2 shows a detail of a section of a silencing arrangement 120. The silencing arrangement 120 comprises a pressure control arrangement 10 and a silencing device 40.

The pressure control arrangement 10 comprises a body part 15 adapted to provide an exhaust port 16 of a fluid channel 17. The body part 15 may be comprised by the pneumatic valve 100. That is, the body part 15 and a body of the pneumatic valve 100 may be integrally formed. Alternatively, the body part 15 is mounted to the body of the pneumatic valve 100.

The fluid channel 17 extends along an axial direction A. The fluid channel 17 extends on one end to the pneumatic valve 100 (not shown) and terminates at another end at the exhaust port 16.

The pressure control arrangement 10 comprises an annular straining device 30 being arranged at the exhaust port 16. The straining device 30 may comprise a rotationally symmetric contour to enable an efficient mounting of the straining device 30.

The body part 15 comprises a cylindrically-shaped inner surface section 19 and a radially extended surface section 20. The straining device 30 comprises a radially extended base 32 contacting the radially extended surface section 20. The straining device 30 comprises an annular lip 33 projecting, in the axial direction A, from the radially extended base 32 towards the body part 15 and contacting an inner surface 18 of the body part 15 circumferentially. Thus, the straining device 30 and the body part 15 are sealingly connected to each other.

The straining device 30 comprises a fluid port 31 for fluid communication between the exhaust port 16 and the silencing device 40 mounted to the body part 15. The fluid port 15 comprises a plurality of holes (not indicated). A pressurised fluid 50 may flow from the fluid channel 17 via the exhaust port 16 through the fluid port 31. Thereby, the flow of the pressurised fluid 50 may be slowed down to reduce noise.

The silencing device 40 comprises a housing 41 and a mesh 42. The mesh 42 is housed by the housing 41, i.e., arranged within the housing 41.

The housing 41 comprises a clip arrangement 43. The clip arrangement 43 is adapted to fixate the silencing device 40 at the body part 15. By fixating the silencing device 40 at the body part 15, an annular protrusion 34 of the straining device 30 is pressed into the mesh 42 which fixates the straining device 30. Therewith, the straining device 30 is mounted to the body part 15.

The housing 40 comprises a base face 44 perpendicular to the axial direction A and a lateral face 45 parallel to the axial direction A and circumferentially arranged around the base face 44. The lateral face 45 comprises a plurality of holes (not shown). The pressurised fluid 50 may flow from the fluid port 31 via the mesh 42 through the holes into an environment of the housing 41. By flowing through the mesh 42, sound generated by the flowing fluid 50 is attenuated. The holes and/or the fluid port 31 may potentially be blocked. Then, there is no other possibility to exhaust the air to the atmosphere. Then, the straining device 30 is working as piston pushing out the silencing device 40 and/or causing cracks in the housing 41 through which the pressurised fluid 50 may be released.

Fig. 3 shows a detail of a section of a silencing arrangement 120 according to an embodiment of the invention. The embodiment of Fig. 3 is described with reference to the embodiment of Figs. 1 and 2. Therein, differences between the embodiments of Figs. 2 and 3 are described.

In Fig. 3, the body part 15 comprises an inner surface 18 and a circumferentially arranged chamfer 25 at the inner surface 18. The chamfer 25 is arranged between the cylindrically-shaped inner surface section 19 and the radially extended surface section 20. Thus, the inner surface 18 comprises a diameter (not indicated) which is constant at the cylindrically-shaped inner surface section 19 and increases, compared to the cylindrically-shaped inner surface section 19, at the chamfer 25. The inner surface 18 terminates with the chamfer 25. The chamfer 25 is arranged, in the axial direction A, between the radially extended surface section 20 and the exhaust port 16.

The chamfer 25 is arranged between the cylindrically-shaped inner surface section 19 and the radially extended base 32 of the annular straining device 30. The annular lip 33 projects, in the axial direction A, from the radially extended base 32 towards the body part 15 and contacts the inner surface 18 of the body part 15 circumferentially. The annular lip 33 projects beyond the chamfer 25.

The straining device 30 is adapted to move reversibly along the axial direction A between a basic position BP and an actuated position AP in dependence on a pressure p of a fluid 50 within the exhaust port 16 so that the fluid 50 is releasable from the exhaust port 16 in the actuated position AP (see Fig. 1 for a schematic illustration of the actuated position AP and basic position BP). As illustrated schematically in Fig. 1, the straining device 30 is adapted to move translationally along the axial direction A between the basic position BP as indicated by a solid line and the actuated position AP as indicated by dotted lines.

As shown in Fig. 3, the body part 15 and the straining device 30 are sealingly connected to each other in the basic position BP as also described with reference to Fig. 2. Specifically, in the basic position BP, the radially extending base 32 of the annular straining device 30 and the radially extended surface section 20 of the body part 15 contact each other and the annular lip 33 of the straining device 30 contacts the cylindrically-shaped inner surface section 19 of the body part 15.

The pressurised fluid 50 may move or deflect the straining device 30 against a restoring force (not indicated) which results from the elasticity and the deformation of the mesh 42 from the basic position BP into the actuated position AP. The pressurised fluid 50 may then be released via a fluid passageway 26 which is provided by the chamfer 25. Thus, the fluid passageway 26 is provided by a gap between the body part 15 and the straining device 30. The restoring force may move the straining device 30 from the actuated position AP into the basic position BP. The distance between the straining device 30 and the body part 15 is smaller in the basic position BP than in the actuated position AP. In the basic position BP the pressure p of the fluid is smaller than before the actuated position AP is achieved and the fluid 50 is released. The mesh 42 is adapted to deform elastically and to reversibly move the straining device 30 along the axial direction A between the basic position and the actuated position.

To improve the situation as described with reference to Fig. 2, the chamfer 15 is provided by the body part 15. In case holes in the housing 41 are blocked, the straining device 30 is pushed out, i.e., from the basic position BP into the actuated position AP because of a force generated by the pressurised fluid 50, the lip seal 33 is opened and the sealing line of the lip seal 33 with the inner surface 19 is lost. Under this condition, the fluid passageway 26 is opened and allows airflow to the atmosphere reducing stresses acting on bottom of the housing 41.

In another embodiment, additionally, the straining device may comprise pockets.

### Reference signs (part of the description)

- 10: pressure control arrangement
- 15: body part
- 16: exhaust port
- 17: fluid channel
- 18: inner surface
- 19: cylindrically-shaped inner surface section
- 20: radially extended surface section
- 25: chamfer
- 26: fluid passageway

- 30: straining device
- 31: fluid port
- 32: base
- 33: annular lip
- 34: protusion

- 40: silencing device
- 41: housing
- 42: mesh
- 43: clip arrangement
- 44: base face
- 45: lateral face
- 50: fluid

- 100: pneumatic valve
- 110: air suspension system
- 120: silencing arrangement
- 200a: vehicle
- 200b: utility vehicle

- A: axial direction
- AP: actuated position
- BP: basic position
- p: pressure

## Claims

1. Pressure control arrangement (10) for a pneumatic valve (100) of an air suspension system (110) for a vehicle (200a), in particular a utility vehicle (200b), wherein the pressure control arrangement (10) comprises
- a body part (15) adapted to provide an exhaust port (16) of a fluid channel (17) extended along an axial direction (A), wherein the body part (15) comprises an inner surface (18) and a circumferentially arranged chamfer (25) at the inner surface (18), and
- an annular straining device (30) mountable to the body part (15), wherein the straining device (30) comprises a fluid port (31) for fluid communication between the exhaust port (16) and a silencing device (40) mountable to the body part (15),
- the straining device (30) is adapted to reversibly move along the axial direction (A) between a basic position (BP) and an actuated position (AP) in dependence on a pressure (p) of a fluid (50) within the exhaust port (16) so that the fluid (50) is releasable from the exhaust port (16) in the actuated position (AP),
wherein
- the straining device (30) comprises a radially extended base (32) and an annular lip (33) projecting, in the axial direction (A), from the radially extended base (32) towards the body part (15) and contacting an inner surface (18) of the body part (15) circumferentially, wherein
- the annular lip (33) projects beyond the chamfer (25),
**characterized in that** in the basic position (BP), the annular lip (33) seals the straining device (30) against the body part (15) while it opens a fluid passageway provided by the chamfer (25) in the actuated position (AP).

2. Pressure control arrangement (10) as claimed in claim 1, wherein the body part (15) and the straining device (30) are sealingly connected to each other in the basic position (BP).

3. Pressure control arrangement (10) as claimed in claim 1, wherein the body part (15) comprises a cylindrically-shaped inner surface section (19) and the chamfer (25) is arranged between the cylindrically-shaped inner surface section (19) and a radially extended base (32) of the annular straining device (30).

4. Pressure control arrangement (10) as claimed in one of the preceding claims, wherein the body part (15) comprises a radially extended surface section (20), and the chamfer (25) is arranged, in the axial direction (A), between the radially extended surface section (20) and the exhaust port (16).

5. Pressure control arrangement (10) as claimed in claims 3 and 4, wherein the chamfer (25) is arranged between the cylindrically-shaped inner surface section (19) and the radially extended surface section (20).

6. Silencing arrangement (120) for a pneumatic valve (100) of an air suspension system (110) for a vehicle (200a), in particular a utility vehicle (200b), comprising the pressure control arrangement (10) as claimed in any one of the preceding claims and a silencing device (40) mounted to the body part (15).

7. Silencing arrangement (120) as claimed in claim 6, wherein the silencing device (40) comprises a mesh (42), wherein the mesh (42) is adapted to deform elastically to reversibly move the straining device (30) along the axial direction (A) between a basic position (BP) and an actuated position (AP).

8. Pneumatic valve (100) of an air suspension system (110) for a vehicle (200a), in particular a utility vehicle (200b), comprising the pressure control arrangement (10) as claimed in any one of claims 1 to 5 and/or the silencing arrangement (120) as claimed in claim 6 or 7.

9. Air suspension system (110) for a vehicle (200a), in particular a utility vehicle (200b), comprising the pressure control arrangement (10) as claimed in any one of claims 1 to 6, the silencing arrangement (120) as claimed in claim 6 or 7 and/or the pneumatic valve (100) as claimed in claim 8.

10. Vehicle (200a), in particular a utility vehicle (200b), comprising the pressure control arrangement (10) as claimed in any one of claims 1 to 5, the silencing arrangement (120) as claimed in claim 6 or 7, the pneumatic valve (100) as claimed in claim 8, and/or the air suspension system (110) as claimed in claim 9.

## Patentansprüche

1. Druckregelanordnung (10) für ein Pneumatikventil (100) eines Luftfederungssystems (110) für ein Fahrzeug (200a), insbesondere ein Nutzfahrzeug (200b), wobei die Druckregelanordnung (10) umfasst
- ein Körperteil (15), das ausgelegt ist, um eine Auslassöffnung (16) eines Fluidkanals (17) bereitzustellen, der sich entlang einer axialen Richtung (A) erstreckt, wobei das Körperteil (15) eine Innenoberfläche (18) und eine umlaufend angeordnete Fase (25) an der Innenoberfläche (18) umfasst, und
- eine ringförmige Spannvorrichtung (30), die an dem Körperteil (15) montierbar ist, wobei die Spannvorrichtung (30) einen Fluidanschluss (31) für eine Fluidverbindung zwischen dem Auslassanschluss (16) und einer Schalldämpfungsvorrichtung (40) umfasst, die an dem Körperteil (15) montierbar ist,
- die Spannvorrichtung (30) ausgelegt ist, um sich entlang der axialen Richtung (A) zwischen einer Grundposition (BP) und einer betätigten Position (AP) in Abhängigkeit von einem Druck (p) eines Fluids (50) innerhalb des Auslassanschlusses (16) reversibel zu bewegen, so dass das Fluid (50) aus dem Auslassanschluss (16) in der betätigten Position (AP) freisetzbar ist, wobei
- die Spannvorrichtung (30) eine radial erweiterte Basis (32) und eine ringförmige Lippe (33) umfasst, die sich in axialer Richtung (A) von der radial erweiterten Basis (32) in Richtung des Körperteils (15) erstreckt und eine Innenoberfläche (18) des Körperteils (15) umlaufend kontaktiert, wobei
- die ringförmige Lippe (33) über die Fase (25) hinausragt,
**dadurch gekennzeichnet, dass** in der Grundposition (BP) die ringförmige Lippe (33) die Spannvorrichtung (30) gegen das Körperteil (15) abdichtet, während sie in der betätigten Position (AP) einen durch die Fase (25) bereitgestellten Fluiddurchgang öffnet.

2. Druckregelanordnung (10) nach Anspruch 1, wobei das Körperteil (15) und die Spannvorrichtung (30) in der Grundposition (BP) dichtend miteinander verbunden sind.

3. Druckregelanordnung (10) nach Anspruch 1, wobei das Körperteil (15) einen zylindrisch geformten Innenoberflächenabschnitt (19) umfasst und die Fase (25) zwischen dem zylindrisch geformten Innenoberflächenabschnitt (19) und einer radial erweiterten Basis (32) der ringförmigen Spannvorrichtung (30) angeordnet ist.

4. Druckregelanordnung (10) nach einem der vorstehenden Ansprüche, wobei das Körperteil (15) einen radial erweiterten Oberflächenabschnitt (20) umfasst, und die Fase (25) in der axialen Richtung (A) zwischen dem radial erweiterten Oberflächenabschnitt (20) und der Auslassöffnung (16) angeordnet ist.

5. Druckregelanordnung (10) nach den Ansprüchen 3 und 4, wobei die Fase (25) zwischen dem zylindrisch geformten Innenoberflächenabschnitt (19) und dem radial erweiterten Oberflächenabschnitt (20) angeordnet ist.

6. Schalldämpfungsanordnung (120) für ein Pneumatikventil (100) eines Luftfederungssystems (110) für ein Fahrzeug (200a), insbesondere ein Nutzfahrzeug (200b), umfassend die Druckregelanordnung (10) nach einem der vorstehenden Ansprüche und eine Schalldämpfungsvorrichtung (40), die an dem Körperteil (15) montiert ist.

7. Schalldämpfungsanordnung (120) nach Anspruch 6, wobei die Schalldämpfungsvorrichtung (40) ein Netz (42) umfasst, wobei das Netz (42) ausgelegt ist, um sich elastisch zu verformen, um die Spannvorrichtung (30) entlang der axialen Richtung (A) zwischen einer Grundposition (BP) und einer betätigten Position (AP) reversibel zu bewegen.

8. Pneumatikventil (100) eines Luftfederungssystems (110) für ein Fahrzeug (200a), insbesondere ein Nutzfahrzeug (200b), umfassend die Druckregelanordnung (10) nach einem der Ansprüche 1 bis 5 und/oder die Schalldämpfungsanordnung (120) nach Anspruch 6 oder 7.

9. Luftfederungssystem (110) für ein Fahrzeug (200a), insbesondere ein Nutzfahrzeug (200b), umfassend die Druckregelanordnung (10) nach einem der Ansprüche 1 bis 6, die Schalldämpfungsanordnung (120) nach Anspruch 6 oder 7 und/oder das pneumatische Ventil (100) nach Anspruch 8.

10. Fahrzeug (200a), insbesondere ein Nutzfahrzeug (200b), umfassend die Druckregelanordnung (10) nach einem der Ansprüche 1 bis 5, die Schalldämpfungsanordnung (120) nach Anspruch 6 oder 7, das pneumatische Ventil (100) nach Anspruch 8 und/oder das Luftfederungssystem (110) nach Anspruch 9.

## Revendications

1. Agencement de commande de pression (10) pour une vanne pneumatique (100) d'un système de suspension pneumatique (110) pour un véhicule (200a), en particulier un véhicule utilitaire (200b), dans lequel l'agencement de commande de pression (10) comprend
- une partie de corps (15) adaptée pour fournir un orifice d'échappement (16) d'un canal de fluide (17) étendu le long d'une direction axiale (A), dans lequel la partie de corps (15) comprend une surface interne (18) et un chanfrein (25) agencé de manière circonférentielle au niveau de la surface interne (18), et
- un dispositif de filtrage annulaire (30) pouvant être monté sur la partie de corps (15), dans lequel le dispositif de filtrage (30) comprend un orifice de fluide (31) pour une communication fluidique entre l'orifice d'échappement (16) et un dispositif de silencieux (40) pouvant être monté sur la partie de corps (15),
- le dispositif de filtrage (30) est adapté pour se déplacer de manière réversible le long de la direction axiale (A) entre une position de base (BP) et une position actionnée (AP) en fonction d'une pression (p) d'un fluide (50) à l'intérieur de l'orifice d'échappement (16) de sorte que le fluide (50) puisse être libéré de l'orifice d'échappement (16) dans la position actionnée (AP), dans lequel
- le dispositif de filtrage (30) comprend une base s'étendant radialement (32) et une lèvre annulaire (33) faisant saillie, dans la direction axiale (A), de la base s'étendant radialement (32) vers la partie de corps (15) et venant en contact avec une surface interne (18) de la partie de corps (15) de manière circonférentielle, dans lequel
- la lèvre annulaire (33) fait saillie au-delà du chanfrein (25),
**caractérisé en ce que**, dans la position de base (BP), la lèvre annulaire (33) scelle le dispositif de filtrage (30) contre la partie de corps (15) tandis qu'elle ouvre un passage de fluide fourni par le chanfrein (25) dans la position actionnée (AP).

2. Agencement de commande de pression (10) selon la revendication 1, dans lequel la partie de corps (15) et le dispositif de filtrage (30) sont raccordés de manière étanche l'un à l'autre dans la position de base (BP).

3. Agencement de commande de pression (10) selon la revendication 1, dans lequel la partie de corps (15) comprend une section de surface interne de forme cylindrique (19) et le chanfrein (25) est agencé entre la section de surface interne de forme cylindrique (19) et une base s'étendant radialement (32) du dispositif de filtrage annulaire (30).

4. Agencement de commande de pression (10) selon l'une des revendications précédentes, dans lequel la partie de corps (15) comprend une section de surface s'étendant radialement (20), et le chanfrein (25) est agencé, dans la direction axiale (A), entre la section de surface s'étendant radialement (20) et l'orifice d'échappement (16).

5. Agencement de commande de pression (10) selon les revendications 3 et 4, dans lequel le chanfrein (25) est agencé entre la section de surface interne de forme cylindrique (19) et la section de surface s'étendant radialement (20).

6. Agencement de silencieux (120) pour une vanne pneumatique (100) d'un système de suspension pneumatique (110) pour un véhicule (200a), en particulier un véhicule utilitaire (200b), comprenant l'agencement de commande de pression (10) selon l'une quelconque des revendications précédentes et un dispositif de silencieux (40) monté sur la partie de corps (15).

7. Agencement de silencieux (120) selon la revendication 6, dans lequel le dispositif de silencieux (40) comprend une maille (42), dans lequel la maille (42) est adaptée pour se déformer élastiquement afin de déplacer de manière réversible le dispositif de filtrage (30) le long de la direction axiale (A) entre une position de base (BP) et une position actionnée (AP).

8. Vanne pneumatique (100) d'un système de suspension pneumatique (110) pour un véhicule (200a), en particulier un véhicule utilitaire (200b), comprenant l'agencement de commande de pression (10) selon l'une quelconque des revendications 1 à 5 et/ou l'agencement de silencieux (120) selon la revendication 6 ou 7.

9. Système de suspension pneumatique (110) pour un véhicule (200a), en particulier un véhicule utilitaire (200b), comprenant l'agencement de commande de pression (10) selon l'une quelconque des revendications 1 à 6, l'agencement de silencieux (120) selon la revendication 6 ou 7 et/ou la vanne pneumatique (100) selon la revendication 8.

10. Véhicule (200a), en particulier un véhicule utilitaire (200b), comprenant l'agencement de commande de pression (10) selon l'une quelconque des revendications 1 à 5, l'agencement de silencieux (120) selon la revendication 6 ou 7, la vanne pneumatique (100) selon la revendication 8, et/ou le système de suspension pneumatique (110) selon la revendication 9.
